# EUROPÄISCHE PATENTSCHRIFT

(11) **EP 0 946 645 B1**
(45) Veröffentlichungstag und Bekanntmachung des Hinweises auf die Patenterteilung: **10.04.2002**
(21) Anmeldenummer: 97950203.6
(22) Anmeldetag: 19.11.1997
(51) Int. Cl.: C08L 67/02

(54) **MODIFIZIERTE POLYESTER**
MODIFIED POLYESTERS
POLYESTERS MODIFIES

(30) Priorität: 18.12.1996 DE 19652757
(43) Veröffentlichungstag der Anmeldung: 06.10.1999
(73) Patentinhaber: Röhm GmbH & Co. KG, 64293 Darmstadt (DE)
(72) Erfinder: MAY, Michael, D-64673 Zwingenberg (DE); WICKER, Michael, D-64342 Seeheim-Jugenheim (DE)
(86) Internationale Anmeldenummer: EP9706457
(87) Internationale Veröffentlichungsnummer: WO9827158

(56) Entgegenhaltungen:
- EP-A- 0 165 390
- EP-A- 0 328 273
- EP-A- 0 411 823
- EP-A- 0 544 147

## Beschreibung

Die Erfindung betrifft die Verwendung von Methylmethacrylat/Styrol-Copolymeren als Schmelzrheologiemodifizierer für teilkristalline, teilaromatische Polyester. Die Erfindung betrifft weiterhin modifizierte Polyester sowie daraus hergestellte Formteile.

### Stand der Technik

Aufgrund der außerordentlich guten Lösungsmittelbeständigkeit und der im Prinzip guten Verarbeitbarkeit bei geringer Schrumpfung finden teilkristalline, teilaromatische Polyester, wie z. B. Polyethylenterephthalat und Polybutylenterephthalat breite Anwendung insbesondere in der Verpackungsindustrie, beispielsweise für Lebensmittelverpackungen, im Automobilbau oder in der Textilindustrie, beispielsweise bei der Faserherstellung. Viele Formteile wie z. B. Getränkeflaschen, Benzintanks, Ansaugsysteme, etc. werden mittels Spritzguß oder Extrusions-Blasformung aus diesen Materialien hergestellt.

US-PS 4 179 479 beschreibt Kunststoffmischungen, die aus mindestens 40 Gew.-% Polyurethan und höchstens 60 Gew.-% Polybutylenterephthalat bestehen können und 0,5 - 10 Gew.-% Polyacrylat-Polymere mit einem Molekulargewicht (Zahlenmittel) von 500.000 bis 1.500.000 als Verarbeitungshilfsmittel enthalten können. Bei dem Polyacrylat kann es sich u. a. um ein Terpolymer aus Methylmethacrylat, n-Butylacrylat und Styrol handeln. Angaben über die Mengenanteile der Monomerkomponenten im Polymer sind nicht enthalten.

EP 0 328 273 B1 beschreibt Schmelzrheologiemodifizierer für thermoplastische Harze bestehend aus Polymeren mit einem Durchschnittsmolekulargewicht von 1.500.000 bis 10.000.000 aus (Meth)acryl-Monomeren mit Resten, die Alkyl, substituierte Alkyle, Cycloalkyl, Aryl, Aralkyl oder Alkaryl sein können. Beispiel 58A beschreibt die Modifikation von Polybutylenterephthalat mit 10 Gew.-% eines Polymeren aus 74 % Methylmethacrylat, 24 % Butylmethacrylat und 2 % Methacrylsäure mit einem Molekulargewicht von 4,9 x 10⁶. Durch den Modifierzusatz wird die Extrusions-Durchhängzeit in sec (ein Maß für die Schmelzviskosität) gegenüber nicht modifiziertem Polybutylenterephthalat von 5,2 auf 10,5 erhöht.

US 5 352 500 beansprucht blasgeformte Artikel aus einem thermoplastischen Harz enthaltend ca. 1 - 25 Gew.-% eines Methacrylat-Polymeren, das zu 70 Gew.-% aus (Meth)acryl-Monomeren mit Resten, die Alkyl, substituierte Alkyle, Cycloalkyl, Aryl, Aralkyl oder Alkaryl sein können besteht. In den Bespielen 2 - 4 wird die Modifikation eines Blends aus Polybutylenterephthalat und Polycarbonat (43/57) mit einem Schlagzähmodifizierungsmittel auf Polymethylmethacrylat/Styrol-Basis mit Kern-Schale-Aufbau gezeigt. Die Modifikation führt zur Erhöhung der Extrusions-Durchhängzeit in sec (ein Maß für die Schmelzviskosität).

DE-OS 23 64 318 beschreibt die Modifizierung von Poly-1, 4-butylenterephthalat oder dessen Copolyestern mit einer geringeren Menge einer aliphatischen oder aromatischen Dicarbonsäure oder eines aliphatischen Polyols enthaltend 1 - 80 Gew.-% eines Verstärkerfüllstoffs in Form von verstärkenden Metallen, Keramikmaterialien, Silicaten, Quarz, Glas und Kohlenstoff durch den Zusatz von Mischpolymerisaten oder Copolymerisaten, die Styrolverbindungen enthalten. Der beispielsgemäße Zusatz eines Mischpolymerisats aus Polypropylen und kautschukmodifiziertem Styrol zu glasfaserverstärktem Polybutylenterephthalat bewirkt eine verbesserte Formbeständigkeit in der Wärme und eine verbesserte Schlagzähigkeit des Kunststoffs. Unter einer Vielzahl geeigneter Copolymerisate werden auch solche aus Methylmethacrylat und Styrol genannt. Der Effekt der Erhöhung der Schmelzviskosität wird nicht berichtet und auch nicht nahegelegt, da viele der genannten Zusätze in gegenteiliger Weise zu einer Erniedrigung der Schmelzviskosität führen.

### Aufgabe und Lösung

Ein grundsätzliches Problem bei der Verarbeitung von teilkristallinen, teilaromatischen Polyester-Typen, wie z. B. Polyethylenterephthalat oder Polybutylenterephthalat, besteht darin, daß die Viskosität nach dem Überschreiten der Schmelztemperatur sehr rasch abnimmt. Dies kann zu Produktionsfehlern insbesondere zu Lochbildung beim Extrusions-Blasformverfahren, oder dem Abreißen der Stränge beim Extrudieren oder beim Faserspinnen führen.

Es wurde als Aufgabe angesehen, teilkristalline, teilaromatische Polyester so zu modifizieren, daß die Schmelzviskosität deutlich verstärkt wird, jedoch die sonstigen Eigenschaften dieser Polyester, insbesondere der teilkristalline Charakter des Kunststoffs, nicht oder nur unwesentlich beeinträchtigt wird.

Die Aufgabe wurde gelöst durch die Verwendung eines Copolymeren aus
a) 60 - 98 Gew.-% Methylmethacrylat
   und
b) 2 - 40 Gew.-% Styrol
   und gegebenenfalls
c) 0 - 20 Gew.-% Maleinsäureanhydrid
als Modifizierungsmittel zur Erhöhung der Schmelzviskosität für teilkristalline, teilaromatische Polyester, wobei Poly-1, 4-butylenterephthalat oder dessen Copolyester mit einer geringeren Menge einer aliphatischen oder aromatischen Dicarbonsäure oder eines aliphatischen Polyols enthaltend 1 - 80 Gew.-% eines Verstärkerfüllstoffs in Form von verstärkenden Metallen, Keramikmaterialien, Silicaten, Quarz, Glas und Kohlenstoff ausgenommen sind.

Die erfindungsgemäße Verwendung des Copolymeren als Modifizierungsmittel (Schmelzrheologiemodifizierer) ermöglicht eine verbesserte Verarbeitbarkeit der teilkristallinen, teilaromatischen Polyester, insbesondere von Polyethylenterephthalat und Polybutylenterephthalat (wobei anspruchsgemäß Verstärkerfüllstoffhaltiges Polybutylenterephthalat gemäß DE-OS 23 64 318 ausgenommen wird), weil deren Schmelzviskosität erheblich ansteigt. Zugleich bleiben die anderen positiven Eigenschaften der Polyester, vor allem die Teilkristallinität erhalten.

Dies ist überraschend, denn obwohl reines Polymethylmethacrylat z. B. mit einer Lösungsviskosität in Chloroform nach ISO 1628-6 von etwa 50 ml/g eine deutlich höhere Schmelzviskosität ηₛ ,ca. 800 Pas bei 230°C/5 MPa, als die von Polymethylmethacrylat/Styrol-Copolymeren aufweist, ergibt sich nur bei der Verwendung der erfindungsgemäßen Copolymeren der gewünschte Effekt. Es wird vermutet, daß dies auf das Mischungsverhalten der Polymer-Schmelzen des Blends zurückzuführen ist.

Durch die erfindungsgemäße Verwendung der Copolymere als Modifizierungsmittel zur Erhöhung der Schmelzviskosität wird ein ebenfalls beanspruchter modifizierter teilkristalliner, teilaromatischer Polyester erhalten. Dieser eignet sich zur Herstellung von Formteilen, insbesondere von mittels Blasformung hergestellter Formteile.

### Ausführung der Erfindung

Unter teilkristallinen, teilaromatischen Polyester-Typen im Sinne der Erfindung werden Kondensationsprodukte der Terephthalsäure mit aliphatischen Diol-Komponenten, wie Ethylenglykol oder 1.4-Butandiol, oder mit Diol-Mischungen verstanden. Beispiele hierfür sind Polyethylenterephthalat und Polybutylenterephthalat.

Die Erfindung eignet sich insbesondere für Polyethylenterephthalat und Polybutylenterephthalat. Besonders bevorzugt ist Polybutylenterephthalat.

Unter Polybutylenterephthalat im Sinne der Erfindung werden Polymere verstanden, die im wesentlichen aus Butylenterephthalat-Einheiten bestehen. Dies sind Polymere mit einem Gehalt von etwa mindestens 95, bevorzugt mindestens 98 Gew.-% Butylenterephthalat oder darüber. Polybutylenterephthalate können gegebenenfalls noch geringe Anteile weiterer Diol-Komponenten wie z. B. Ethylenglykol enthalten.. Gegebenenfalls können auch Mischungen mit geringen Anteilen, z. B. 5 - 20 % verträglicher Polymere, wie z. B. Polycarbonat und/oder Acrylnitril/Butadien/Styrol-Copolymeren (ABS) vorliegen.

Unter Polyethylenterephthalat im Sinne der Erfindung werden Polymere verstanden, die im wesentlichen aus Ethylenterephthalat-Einheiten bestehen. Dies sind Polymere mit einem Gehalt von etwa mindestens 95, bevorzugt mindestens 98 Gew.-% Ethylenterephthalat oder darüber. Polyethylenterephthalate können gegebenenfalls noch geringe Anteile weiterer Diol-Komponenten wie z. B. Butandiol enthalten. Anorganische Füllstoffe wie z. B. Talkum oder Glasfasern können ebenfalls enthalten sein. Gegebenenfalls können auch Mischungen mit geringen Anteilen, z. B. 5 - 20 % verträglicher Polymere, wie z. B. Polycarbonat und/oder Acrylnitril/Butadien/Styrol-Copolymeren (ABS) vorliegen.

### Die Modifizierungsmittel zur Erhöhung der Schmelzviskosität für teilkristalline, teilaromatische Polyester

Die Copolymeren bestehen aus a) 60 - 98 Gew.-% Methylmethacrylat und b) 2 - 40 Gew.-% Styrol und gegebenenfalls c) 0 - 20 Gew.-% Maleinsäureanhydrid und können in an sich bekannter Weise aus den Monomeren a.), b.) und c.) durch radikalische, anionische oder Gruppentransferpolymerisation hergestellt werden. Die Polymerisation kann in Masse, Suspension, Emulsion oder Lösung durchgeführt werden.

Zur Herstellung der Mischungen der Schmelzrheologiemodifizierer mit Polybutylenterephthalat (PBT) kann z. B. das als Granulat vorliegende Polybutylenterephthalat mit dem Copolymerisat, das als Mahlgut oder als Granulat vorliegen kann, in langsam laufenden Mischaggregaten, wie beispielsweise Trommel-, Rhönrad- oder Doppelkammerpflugscharmischern vorgemischt werden.

Solchermaßen hergestellte Vormischungen werden anschließend in heizbaren Mischaggregaten bei den dafür geeigneten Temperaturen, beispielsweise zwischen 180 C und 300°C, in Knetern oder vorzugsweise in Extrudern, beispielsweise in Ein- oder Mehrschneckenextrudern oder gegebenenfalls in Extrudern mit oszillierender Schnecke und mit Scherstiften (Kneter d. Fa. Buss) zu homogenen Kunststoff-Mischungen verarbeitet.

Bevorzugt ist die radikalische Polymerisation der Monomeren in Gegenwart von Polymerisationsinitiatoren und gegebenenfalls Molekulargewichtsreglern. Das mittlere Molekulargewicht M_{w} (Gewichtsmittel) liegt bei ca. 100.000 bis 1.000.000, bevorzugt im Bereich von 150.000 bis 500.000, besonders bevorzugt im Bereich von 200.000 bis 400.000. Die Bestimmung des Molekulargewichts M_{w} kann beispielsweise per Gelpermeationschromatographie oder per Streulichtmethode erfolgen (siehe z. B. H. F. Mark et al., Encyclopedia of Polymer Science and Engineering, 2nd. Ed., Vol. 10, Seiten 1 ff, J. Wiley, 1989).

Bevorzugt sind Schmelzrheologiemodifizierer mit einem Gehalt von 70 - 95 Gew.-%, insbesondere 80 - 90 Gew.-% Methylmethacrylat, 5 - 30 Gew.-%, insbesondere 10 - 20 Gew.-% Styrol und gegebenenfalls 0 - 15 Gew.-% Maleinsäureanhydrid. Insbesondere bei Schmelzrheologiemodifizierern mit höherem Molekulargewicht, ab ca. 180.000, bevorzugt 200.000, kann in der Regel auf Maleinsäureanhydrid als Comonomer verzichtet werden.

Nicht zwingend erforderlich aber gegebenenfalls möglich ist es, daß weitere copolymerisierbare Monomere wie z. B. Alkyl(meth)acrylate mit 2 bis 8 Kohlenstoffatomen im Alkyrest in Mengen von 0 - 10 Gew.-%, bevorzugt höchstens 5 Gew.-% enthalten sind.

Bei den gegebenenfalls in Anteilen von 0 - 10 % enthaltenen, weiteren Comonomeren, kann es sich z. B. um Methylacrylat, Ethylacrylat, Ethylmethacrylat, n-Butylacrylat, n-Butylmethacrylat, Hexylmethacrylat, Cyclohexylacrylat oder Cyclohexylmethacrylat handeln.

### Modifizierte teilkristalline, teilaromatische Polyester

Modifizierte teilkristalline, teilaromatische Polyester werden durch Zumischen der Schmelzrheologiemodifizierer erhalten. Dies kann im einfachsten Fall durch Vormischen von Granulat oder Mahlgut und dessen anschließende Extrusion erfolgen. Die so erhaltene Formmasse kann entweder direkt verarbeitet werden oder wiederum zu einem modifizierten teilkristallinen, teilaromatischen Polyester-Blend granuliert werden.

Die Verwendungsmengen der Schmelzrheologiemodifizierer liegen im Bereich von 0,5 bis 40 Gew.-%, bevorzugt 2 - 35 Gew.-% bezogen auf das Gesamtgewicht der Mischung. Die gewünschte Steigerung der Schmelzviskosität ist schon bereits ab etwa 0,5 Gew.-% festzustellen. Bevorzugt sind Verwendungsmengen von 5 - 35 Gew.-%, insbesondere 10 - 35 Gew.-% und besonders bevorzugt von 15 - 35 Gew.-%.

Die Verarbeitung der modifizierten teilkristallinen, teilaromatischen Polyester kann im Prinzip wie bei nicht modifiziertem Polyester mittels Extrusion, Spritzguß, Warmumformen, Schmelzspinnverfahren oder bevorzugt Blasformen erfolgen. Übliche Verarbeitungstemperaturen liegen im Bereich von 250 - 290 °C.

Die erfindungsgemäß modifizierten teilkristallinen, teilaromatischen Polyester lassen sich oberhalb der Schmelztemperatur besonders gut verarbeiten, weil die Viskosität der Schmelze wesentlich erhöht wird. Gleichzeitig bleibt die Schmelzenthalpie, bestimmt nach DSC (Differential Scanning Methode, vgl. hierzu Brandrup, J. und Immergut, E. H., (1975): Polymer Handbook, III, S. 144 - 148, Wiley, J.) als Indiz für die Lösungsmittelbeständigkeit, dem Massenanteil entsprechend, nahezu unverändert erhalten. Insbesondere bei der Blasformung, wo sehr gleichmäßige Wandstärken der erzeugten Formteile gefordert sind, ergeben sich deutliche Vorteile. Die Schmelze der durch Extrusion erzeugten Schmelzeschläuche neigt weniger dazu sich unter Einwirkung der Schwerkraft zu verziehen. Der tolerierbare Temperaturbereich, in dem die Formlinge ohne Ausschuß verarbeitet werden können, verbreitert sich. Dies ermöglicht eine sicherere Produktion und gestattet es auch die Verarbeitungstemperaturen und damit die Taktzeiten zu erhöhen, was zu einer insgesamt besseren Wirtschaftlichkeit führt.

### BEISPIELE

Die Erfindung wird durch die folgenden Beispiele erläutert, deren Ergebnisse in Tabelle 1 zusammengefaßt sind:

Die Lösungsviskositäten (ml/g) wurden in Chloroform nach ISO 1628-6 bestimmt. Die Schmelzeviskosität ηₛ (Pas) wurde nach DIN 54 811 Verfahren B bestimmt. Die Schmelzenthalpie (J/g) wurde per DSC (Differential Scanning Methode) bestimmt.

In den Beispiel 1 - 29 wurde ein Polybutylenterephthalat-Homopolymer (Vestodur 1000 der Fa. Hüls AG, Marl, Deutschland) verwendet.
Die Copolymere in den Beispielen 2 - 29 wurden wie unten angegeben synthetisiert, zerkleinert, mit Polybutylenterephthalat-Granulat vorgemischt und anschließend in einem Einschneckenextruder bei 280°C zu einer homogenen Schmelze verarbeitet. Die Messungen wurden an Granulatproben vorgenommen.

### Beispiel 1:

### Vergleichsbeispiel mit reinem Polybutylenterephthalat (PBT)

### Beispiele 2 - 5:

### Copolymer aus 90 Gew.-% Methylmethacrylat und 10 Gew.-% Styrol.

Einem Monomerengemisch aus 7200 g Methylmethacrylat und 800 g Styrol werden als Polymerisationsinitiatoren 16 g Dilauroylperoxid sowie 4 g 2,2-Bis(tert.-butylperoxy)butan und als Molekulargewichtsregler 28 g n-Dodecylmercaptan zugegeben. Diese Lösung wird in einer Polymerisationskammer zunächst über Trockeneis während 15 Minuten durch Anlegen eines Vakuums weitestgehend von Sauerstoff befreit. Danach wird im Wasserbad 5 Stunden bei 65°C und 17 Stunden bei 55°C polymerisiert. Zur Endpolymerisation wird das Produkt anschließend im Trockenschrank 12 Stunden bei 120°C getempert.
Das Polymerisat weist eine Lösungsviskosität in Chloroform nach ISO 1628-6 von 66 ml/g auf.

### Beispiele 6 - 9

### Copolymer aus 90 Gew.-% Methylmethacrylat und 10 Gew.-% Styrol.

Die Herstellung erfolgt analog der oben beschriebenen Verfahrensweise. Als Molekulargewichtsregler werden 16 g n-Dodecylmercaptan verwendet. Das Polymerisat weist eine Lösungsviskosität in Chloroform nach ISO 1628-6 von 99 ml/g auf.

### Beispiele 10 - 13

### Copolymer aus 85 Gew.-% Methylmethacrylat und 15 Gew.-% Styrol.

Die Herstellung erfolgt analog der oben beschriebenen Verfahrensweise. Als Molekulargewichtsregler werden 28 g n-Dodecylmercaptan verwendet. Das Polymerisat weist eine Lösungsviskosität in Chloroform nach ISO 1628-6 von 77 ml/g auf.

### Beispiele 14 - 17

### Copolymer aus 85 Gew.-% Methylmethacrylat und 15 Gew.-% Styrol.

Die Herstellung erfolgt analog der oben beschriebenen Verfahrensweise. Als Molekulargewichtsregler werden 16.8 g n-Dodecylmercaptan verwendet. Das Polymerisat weist eine Lösungsviskosität in Chloroform nach ISO 1628-6 von 105 ml/g auf.

### Beispiele 18 - 21

### Copolymer aus 80 Gew.-% Methylmethacrylat und 20 Gew.-% Styrol.

Die Herstellung erfolgt analog der oben beschriebenen Verfahrensweise. Als Molekulargewichtsregler werden 28 g n-Dodecylmercaptan verwendet. Das Polymerisat weist eine Lösungsviskosität in Chloroform nach ISO 1628-6 von 77 ml/g auf.

### Beispiele 22 - 25

### Copolymer aus 80 Gew.-% Methylmethacrylat und 20 Gew.-% Styrol.

Die Herstellung erfolgt analog der oben beschriebenen Verfahrensweise. Als Molekulargewichtsregler werden 16 g n-Dodecylmercaptan verwendet. Das Polymerisat weist eine Lösungsviskosität in Chloroform nach ISO 1628-6 von 106 ml/g auf.

### Beispiele 26 - 29

### Copolymer aus 75 Gew.-% Methylmethacrylat,15 Gew.-% Styrol und 10 Gew.-% Maleinsäureanhydrid.

Die Herstellung erfolgt analog der oben beschriebenen Verfahrensweise. Als Polymerisationsinitiatoren werden 3.36 g Dilauroylperoxid und 0.8 g tert.-Butylperisononanoat und als Molekulargewichtsregler 13.4 g 2-Mercapto-ethanol verwendet. Die Polymerisation im Wasserbad erfolgt über 6 Stunden bei 60°C und 25 Stunden bei 50°C.
Das Polymerisat weist eine Lösungsviskosität in Chloroform nach ISO 1628-6 von 65 ml/g auf.

**Tabelle 1:**

| **Zusammenfassung der Ergebnisse der Beispiele 1 - 29** | | | | | |
|---|---|---|---|---|---|
| Bsp. Nr. | SRM: MA/SR/MSA | LV ml/g | Mischungsverhältnis SRM : PBT | Schmelzviskosität 230 ^{•}C/5MPa ηₛ (Pas) | Schmelzenthalpie (J/g) |
| 1 | - | - | 0 : 100 | 264 | 33,6 |
| 2 | 90 / 10 / 0 | 66 | 5:95 | 290 | |
| 3 | 90/10/0 | 66 | 10:90 | 314 | |
| 4 | 90/10/0 | 66 | 20 : 80 | 415 | |
| 5 | 90 / 10 / 0 | 66 | 30 : 70 | 518 | |
| 6 | 90/10/0 | 99 | 5 : 95 | 356 | |
| 7 | 90 / 10 / 0 | 99 | 10:90 | 398 | |
| 8 | 90/10/0 | 99 | 20:80 | 429 | |
| 9 | 90 / 10 / 0 | 99 | 30 : 70 | 582 | |
| 10 | 85 / 15 / 0 | 77 | 5 : 95 | 354 | |
| 11 | 85 / 15 / 0 | 77 | 10 : 90 | 398 | 40,6 |
| 12 | 85/15/0 | 77 | 20 : 80 | 684 | 33,9 |
| 13 | 85/15/0 | 77 | 30 : 70 | 870 | 34,8 |
| 14 | 85/15/0 | 105 | 5 : 95 | 318 | |
| 15 | 85/15/0 | 105 | 10 : 90 | 556 | |
| 16 | 85/15/0 | 105 | 20 : 80 | 609 | |
| 17 | 85/15/0 | 105 | 30 : 70 | 705 | |
| 18 | 80/20/0 | 77 | 5:95 | 428 | |
| 19 | 80 / 20 / 0 | 77 | 10 : 90 | 381 | |
| 20 | 80/20/0 | 77 | 20:80 | 698 | |
| 21 | 80/20/0 | 77 | 30 : 70 | 683 | |
| 22 | 80/20/0 | 106 | 5:95 | 424 | |
| 23 | 80/20/0 | 106 | 10 : 90 | 464 | |
| 24 | 80/20/0 | 106 | 20 : 80 | 536 | |
| 25 | 80/20/0 | 106 | 30 : 70 | 718 | |
| 26 | 75/15/10 | 65 | 5:95 | 398 | |
| 27 | 75/15/10 | 65 | 10 : 90 | 463 | |
| 28 | 75/15/10 | 65 | 20 : 80 | 507 | |
| 29 | 75/15/10 | 65 | 30 : 70 | 486 | |
| Abkürzungen: | | | | | |
| LV = Lösungsviskosität in Chloroform nach ISO 1628-6 | | | | | |
| SRM = Schmelzrheologiemodifizierer | | | | | |
| MA = Methylmethacrylat, SR = Styrol, MSA = Maleinsäureanhydrid | | | | | |

## Patentansprüche

1. Verwendung eines Copolymeren aus
a) 60 - 98 Gew.-% Methylmethacrylat
und
b) 2 - 40 Gew.-% Styrol
und gegebenenfalls
c) 0- 20 Gew.-% Maleinsäureanhydrid
als Modifizierungsmittel zur Erhöhung der Schmelzviskosität für teilkristalline, teilaromatische Polyester, wobei Poly-1, 4-butylenterephthalat oder dessen Copolyester mit einer geringeren Menge einer aliphatischen oder aromatischen Dicarbonsäure oder eines aliphatischen Polyols enthaltend 1 - 80 Gew.-% eines Verstärkerfüllstoffs in Form von verstärkenden Metallen, Keramikmaterialien, Silicaten, Quarz, Glas und Kohlenstoff ausgenommen sind.

2. Verwendung eines Copolymeren gemäß Anspruch 1 als als Modifizierungsmittel zur Erhöhung der Schmelzviskosität für Polybutylenterephthalat.

3. Verwendung eines Copolymeren gemäß Anspruch 1 als Modifizierungsmittel zur Erhöhung der Schmelzviskosität für Polyethylenterephthalat.

4. Verwendung eines Copolymeren nach Anspruch 1 in einer Menge von 0,5 bis 40 Gew.-% bezogen auf den Polyester.

5. Modifizierter, teilkristalliner, teilaromatischer Polyester, wobei Poly-1, 4-butylenterephthalat oder dessen Copolyester mit einer geringeren Menge einer aliphatischen oder aromatischen Dicarbonsäure oder eines aliphatischen Polyols enthaltend 1 - 80 Gew.-% eines Verstärkerfüllstoffs in Form von verstärkenden Metallen, Keramikmaterialien, Silicaten, Quarz, Glas und Kohlenstoff ausgenommen sind,
**dadurch gekennzeichnet, daß**
5-40 Gew.-% eines Copolymeren bestehend aus
a) 60 - 98 Gew.-% Methylmethacrylat
und
b) 2 - 40 Gew.-% Styrol
und gegebenenfalls
c) 0 - 20 Gew.-% Maleinsäureanhydrid
enthalten sind.

6. Modifizierter Polyester nach Anspruch 5, **dadurch gekennzeichnet, daß** der Polyester Polybutylenterephthalat ist.

7. Modifizierter Polyester nach Anspruch 5, **dadurch gekennzeichnet, daß** der Polyester Polyethylenterephthalat ist.

8. Formteil aus einem modifizierten Polyester nach Anspruch 5.

9. Formteil nach Anspruch 8, **dadurch gekennzeichnet, daß** es durch Extrusions-Blasformung hergestellt ist.

## Claims

1. Use of a copolymer of
a) 60-98 wt.-% methyl methacrylate
and
b) 2-40 wt.-% styrene
and optionally
c) 0-20 wt.-% maleic acid anhydride
as a modifier for increasing the melt viscosity for partially-crystalline, partially-aromatic polyesters, with the exception of poly-1,4-butylene terephthalate or the copolymers thereof with a smaller quantity of an aliphatic or aromatic dicarboxylic acid or an aliphatic polyol, containing 1-80 wt.-% of an active filler in the form of fortifying metals, ceramic materials, silicates, quartz, glass and carbon.

2. Use of a copolymer according to claim 1 as modifiers for increasing the melt viscosity of polyethylene terephthalate.

3. Use of a copolymer according to claim 1 as a modifier for increasing the melt viscosity of polyethylene terephthalate.

4. Use of a copolymer according to claim 1 in a quantity of 0.5 to 40 wt.-%, based on the polyester.

5. Modified, partially-crystalline, partially-aromatic polyester, with the exception of poly-1,4-butylene terephthalate or the copolymers thereof with a smaller quantity of an aliphatic or aromatic dicarboxylic acid or an aliphatic polyol, containing 1-80 wt.-% of an active filler in the form of fortifying metals, ceramic materials, silicates, quartz, glass and carbon, **characterised in that** it contains 5-40 wt.-% of a copolymer comprising
a) 60-98 wt.-% methyl methacrylate
and
b) 2-40 wt.-% styrene
and optionally
c) 0-20 wt.-% maleic acid anhydride.

6. A modified polyester according to claim 5, **characterised in that** the polyester is polybutylene terephthalate.

7. A modified polyester according to claim 5, **characterised in that** the polyester is polyethylene terephthalate.

8. A moulded part made from a modified polyester according to claim 5.

9. A moulded part according to claim 8, **characterised in that** it is made by extrusion blow moulding.

## Revendications

1. Utilisation d'un copolymère de
a) 60 à 98 % en poids de méthacrylate de méthyle,
et
b) 2 à 40 % en poids de styrène,
et le cas échéant
c) de 0 à 20 % en poids d'anhydride maléique
comme agent de modification visant à l'accroissement de la viscosité à l'état fondu pour les polyesters partiellement cristallins, partiellement aromatiques, à l'exclusion du téréphtalate de poly-1,4-butylène ou de son copolyester avec une plus faible quantité d'un acide dicarboxylique aliphatique ou aromatique ou d'un polyol aliphatique contenant de 1 à 80 % en poids d'une charge de renforcement sous forme de métaux de renforcement, de matériaux céramiques, de silicates, de quartz, de verre et de carbone.

2. Utilisation d'un copolymère selon la revendication 1 comme agent modificateur en vue d'accroître la viscosité à l'état fondu du téréphtalate de polybutylène.

3. Utilisation d'un copolymère selon la revendication 1, comme agent modificateur pour accroître la viscosité à l'état fondu du téréphtalate de polyéthylène.

4. Utilisation d'un copolymère selon la revendication 1 en une quantité de 0,5 à 40 % en poids par rapport au polyester.

5. Polyester partiellement cristallin, partiellement aromatique modifié, à l'exception du téréphtalate de poly-1,4-butylène ou de ses copolyesters avec une faible quantité d'un acide dicarboxylique aliphatique ou aromatique ou d'un polyol aliphatique contenant de 1 à 80 % en poids d'une charge de renforcement sous forme de métaux de renforcement, de matériaux céramiques, de silicates, de quartz, de verre et de carbone,
**caractérisé en ce qu'**
il contient
de 5 à 40 % en poids d'un copolymère constitué de
a) 60 à 98 % en poids de méthacrylate de méthyle,
et
b) 2 à 40 % en poids de styrène,
et le cas échéant
c) de 0 à 20 % en poids d'anhydride maléique.

6. Polyester modifié selon la revendication 5,
**caractérisé en ce que**
le polyester est le téréphtalate de polybutylène.

7. Polyester modifié selon la revendication 5,
**caractérisé en ce que**
le polyester est le téréphtalate de polyéthylène.

8. Article moulé constitué d'un polyester modifié selon la revendication 5.

9. Article moulé selon la revendication 8,
**caractérisé en ce qu'**
il est fabriqué au moyen d'un formage avec soufflage par extrusion.
